**Europäisches Patentamt**

**European Patent Office**

**Office européen des brevets**

(19)

(11) Veröffentlichungsnummer: **0 253 909**
**B1**

(12) ## EUROPÄISCHE PATENTSCHRIFT

(45) Veröffentlichungstag der Patentschrift:
**31.01.90**

(51) Int. Cl.⁴: **B29C 43/02, B29C 43/36**

(21) Anmeldenummer: **86109952.1**

(22) Anmeldetag: **19.07.86**

(54) **Verfahren und Vorrichtung zur Herstellung von Formpressteilen.**

(43) Veröffentlichungstag der Anmeldung:
**27.01.88 Patentblatt 88/4**

(45) Bekanntmachung des Hinweises auf die Patenterteilung:
**31.01.90 Patentblatt 90/5**

(84) Benannte Vertragsstaaten:
**AT BE CH DE FR GB IT LI NL SE**

(56) Entgegenhaltungen:
**DE-A- 3 511 954**
**US-A- 3 493 645**
**US-A- 3 557 408**
**US-A- 3 906 072**

(73) Patentinhaber: **Polynorm Roosendaal B.V.,
Borchwerf 37, NL-4704 RG Roosendaal(NL)**

(72) Erfinder: **Diedrichs, Helmut W., Greinstr. 49,
D-6100 Darmstadt(DE)**

(74) Vertreter: **Holjtink, Reinoud et al, OCTROOIBUREAU
ARNOLD & SIEDSMA Sweelinckplein 1, NL-2517 GK Den
Haag(NL)**

## Beschreibung

Die Erfindung betrifft ein Verfahren zur Herstellung von im wesentlichen starren, dünnwandigen Formpreßteilen 7, die an mindestens einem Rand mit einem Randstreifen 8, insbesondere einer Dichtlippe 8 o.dgl. verbunden sind.

Ausführungsbeispiele für derartige Formpreßteile sind Verkleidungs- und/oder Luftleitelemente für Fahrzeuge oder für Kühlmöbel. In allen Fällen besteht das Problem darin, an dem im wesentlichen starren Formpreßteil einen weichen, gummielastischen Randstreifen anzubringen, üblicherweise eine Dichtlippe, die eine Abdichtung zu einem benachbarten Karosserieteil oder Gehäuseteil bildet.

Es handelt sich hierbei häufig um aus Glasmatten-Thermoplasten bestehende Formpreßteile, die mit der elastischen Dichtlippe verbunden sind.

Anwendungsbeispiele im Kraftfahrzeugbau sind die Radkapselung, Luftleitteile und Motorkapselung. Daneben gibt es zahlreiche andere Anwendungsgebiete, in denen es insbesondere auch aus Gründen der Herstellungskosten erwünscht ist, ein starres, dünnwandiges Werkstück mit einem vorzugsweise zur Abdichtung dienenden elastischen Teil zu verbinden, das in den meisten Fällen einen geraden oder geformten Randstreifen oder eine Dichtlippe bildet. Das starre Werkstück kann hierbei auch dazu bestimmt sein, in erster Linie zur Befestigung des elastischen Teils zu dienen.

Bei einem bekannen Verfahren zur Herstellung derartiger zusammengesetzter Formpreßteile wird mit zwei Extrudern Kunststoff in ein Formwerkzeug gespritzt. Dadurch wird ein dünnwandiges, im wesentlichen flächiges Formteil hergestellt, das aus zwei unterschiedlichen Kunststoffen besteht. Die Verbindung der beiden Kunststoffe erfolgt durch die im eingespritzten Kunststoff enthaltene Wärme- und Druckenergie. Die beiden Kunststoffe verbinden sich an ihrer Berührungsstelle. So wird z.B. an ein aus Polypropylen bestehendes Spritzteil eine Dichtlippe aus weichem Polypropylen oder Ethylen-Propylen-Terpolymer (EPDM) oder ähnlichen Werkstoffen angeformt. Die Verbindungslinie der beiden Kunststoffe ist in den meisten Fällen nicht scharf abgrenzbar. Die erforderlichen Werkzeugkosten sind verhältnismäßig hoch. Das bekannte Verfahren ist nur auf extrudierfähige Kunststoffe eingeschränkt. Für die Herstellung großer Formteile werden sehr große und damit teure Spritzgießmaschinen benötigt.

Aus diesen Gründen werden in der Praxis Dichtlippen und ähnliche weiche Randstreifen häufig an die starren Formpreßteile angeklebt, angenietet, angeschweißt oder durch formschlüssige Verbindungen angebracht. Hierfür müssen die beiden miteinander zu verbindenden Teile zunächst getrennt hergestellt werden und anschließend verbunden werden. Der hierzu erforderliche Arbeitsaufwand ist verhältnismäßig hoch.

Beim Anbringen von Dichtlippen durch Kleben ergeben sich in der Praxis häufig Probleme, insbesondere bei aus Polypropylen bestehenden Formpreßteilen. Die Dichtlippen sind daher nur umständlich und kostenaufwendig anzubringen.

Aufgabe der Erfindung is es daher, ein Verfahren der eingangs genannten Gattung zu schaffen, das es ermöglicht, mit geringem Arbeitsaufwand eine sichere Verbindung von im wesentlichen starren, dünnwandigen Formpreßteilen mit gummielastischen Randstreifen, insbesondere Dichtlippen o.dgl. zu erzielen.

Diese Aufgabe wird erfindungsgemäß dadruch gelöst, daß für das Formpreßteil 7 ein thermoplastisches, Fasern enthaltendes Ausgangsmaterial und für den gummielastischen Randstreifen ein thermoplastisches Ausgangsmaterial verwendet werden, und daß durch Wärmeeinwirkung die beiden thermoplastischen Ausgangsmaterialien plastifiziert und in einem Formwerkzeug unter Druck an ihren Berührungskanten miteinander verschweißt werden.

Die Verbindung der beiden unterschiedlichen Werkstoffe erfolgt dabei bereits während des Formvorgangs, so daß jegliche nachträgliche Arbeitsgänge zur Befestigung des elastischen Randstreifens entfallen. Die Anwendung ist nicht auf die Verwendung von extrudierfähigen Materialien eingeschränkt, so daß beispielsweise auch Glasmattenthermoplaste und sonstige Mattenthermoplaste mit einer Dichtlippe versehen werden können, obwohl die Glasmattenthermoplaste verhältnismäßig lange und dicke Glasfasern aufweisen und nicht extrudierfähig sind.

Vorteilhafte Ausgestaltungen des Erfindungsgedankens sind Gegenstand von Unteransprüchen.

Die Erfindung betrifft außerdem vorteilhafte Vorrichtungen zur Ausführung des Verfahrens.

Die Erfindung wird nachfolgend an Ausführungsbeispiel näher erläutert, die in der Zeichnung dargestellt sind.

Es zeigt:

Fig 1 ein Formwerkzeug im geöffneten Zustand vor dem Einbringen der Materialien,

Fig. 2 das Formwerkzeug nach Fig. 1 im teilweise geschlossenen Zustand mit den eingebrachten Materialien,

Fig. 3 das Formwerkzeug nach den Fig. 1 und 2 im vollständig geschlossenen Zustand, jeweils im senkrechten Schnitt,

Fig. 4 eine Ausführungsform des Formwerkzeugs, bei dem eines der Ausgangsmaterialien durch einen Extruder eingebracht wird,

Fig. 5 ein gegenüber der Fig. 4 abgewandeltes Formwerkzeug, ebenfalls im senkrechten Schnitt, wobei eines der Ausgangsmaterialien durch einen Dosierkolben eingebracht wird,

Fig 6 im senkrechten Schnitt ein Formwerkzeug in Tandemausführung mit einem federnd abgestützten Formwerkzeugteil,

Fig. 7 das Formwerkzeug nach Fig. 6 im vollständig geschlossenen Zustand,

Fig. 8 in einem senkrechten Schnitt im geöffneten Zustand ein Formwerkzeug mit einer bewegbaren Sperrleiste im Verbindungsbereich der beiden Ausgangsmaterialien, wobei das Formwerkzeug im vollständig geöffneten Zustand gezeigt ist,

Fig. 9 das Formwerkzeug nach Fig. 8 im teilweise geschlossenen Zustand,

Fig. 10 das Formwerkzeug nach den Fig. 8 und 9 im vollständig geschlossenen Zustand und

Fig. 11 in räumlicher Darstellungsweise ein Formpreßteil mit einem angeformten gummielastischen Randstreifen.

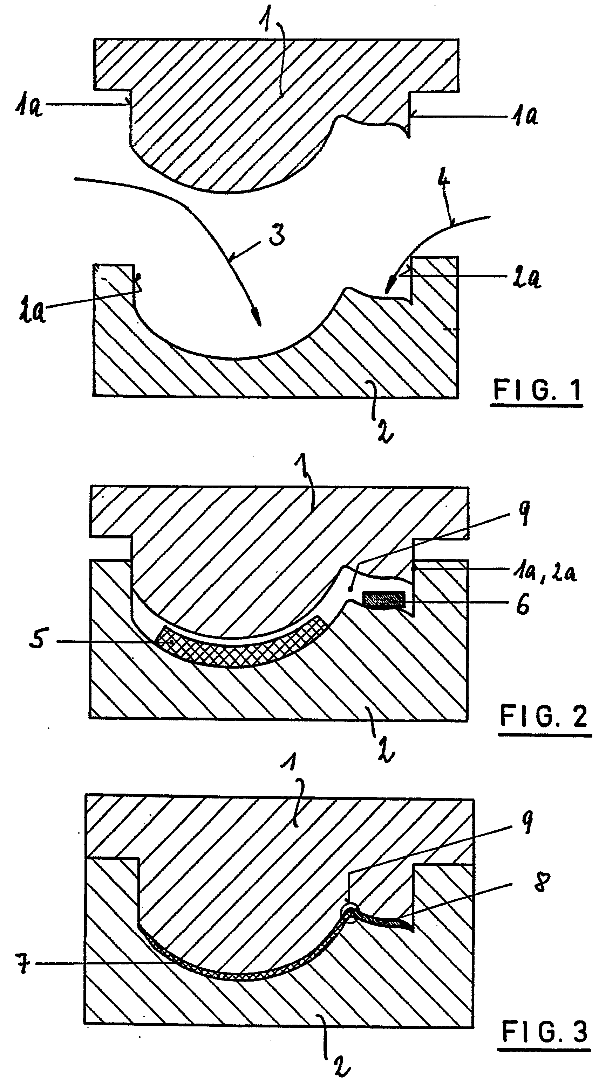

Das in den Fig. 1 bis 3 gezeigte Tauchkanten-Formwerkzeug weist ein Werkzeugoberteil 1 und ein Werkzeugunterteil 2 auf, zwischen die - wie mit den Pfeilen 3 und 4 in Fig. 1 angedeutet - Ausgangsmaterialien 5 und 6 für ein starres, dünnwandiges Formpreßteil 7 und eine daran anzuformende gummielastische Dichtlippe 8 eingebracht werden. Das Ausgangsmaterial 5 wird beispielsweise als mattenförmiges Glasfaserthermoplast eingelegt. Das Ausgangsmaterial 6 ist vorzugsweise bereits als länglicher Streifen in Anpassung an die endgültige Form der Dichtlippe 8 zugeschnitten. Das Einlegen der Ausgangsmaterialien 5 bzw. 6 erfolgt entweder gleichzeitig oder kurz nacheinander.

Da die Werkzeughälften 1, 2 vorher gekühlt sind, ist es notwendig, daß sich die beiden Werkzeughälften 1, 2 schnell gegeneinander bewegen, damit sich die Form schnell schließt und eine thermoplastische Verformung und Verschweißung der Ausgangsmaterialien erfolgt. Die zu verbindenden Ausgangsmaterialien 5, 6 wurden durch ein Infrarot-Beheizungselement beispielsweise auf etwa 180°C erwärmt und von Hand oder durch eine automatische Beschickungseinrichtung in das Formwerkzeug eingelegt. Es hat sich in der Praxis als günstig erwiesen, wenn die Werkzeughälften 1, 2 eine Temperatur von etwa 50°C haben.

Nach Beendigung des Formvorgang sind das Formpreßteil 7 und der Ranstreifen 8 im Bereich einer Verbindungsnaht 9 (Fig. 3) miteinander verschweißt und dauerhaft verbunden.

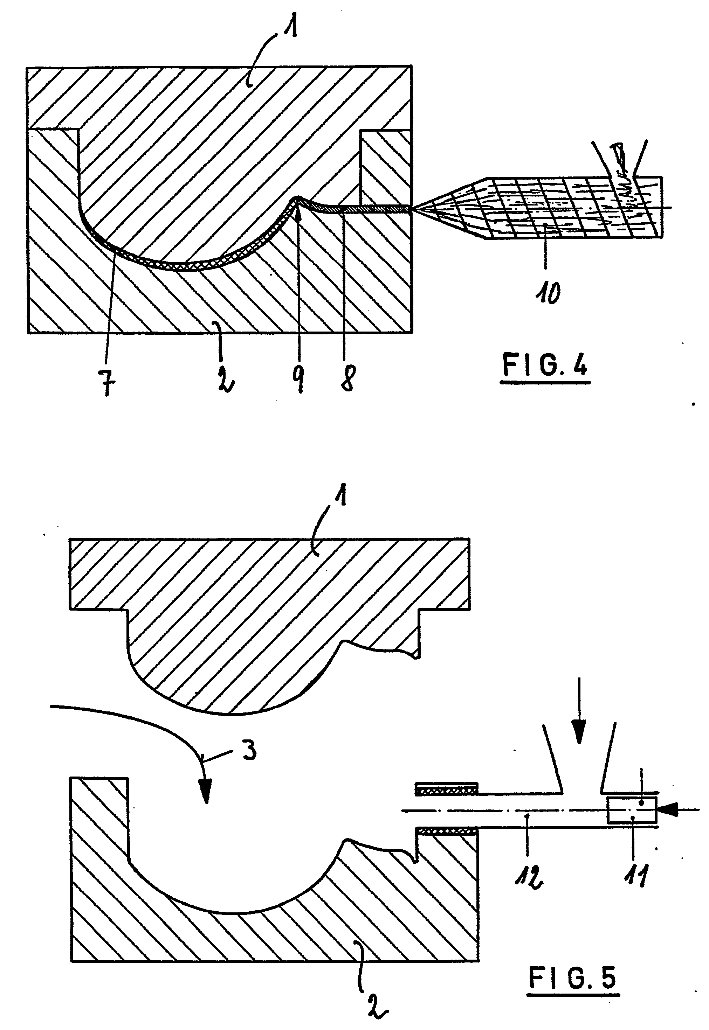

Bei dem in Fig. 4 vereinfacht dargestellten Ausführungsbeispiel wird das starre Formpreßteil 7 in der schon beschriebenen Weise zwischen den Werkzeughälften 1 und 2 gepreßt. Das Ausgangsmaterial für den gummielastischen Randstreifen 8 wird hierbei durch einen Extruder 10 in das Formwerkzeug eingespritzt und verbindet sich an der Naht 9 mit dem Material des Formpreßteils 7. Das Ausgangsmaterial für das Teil 8 ist beispielsweise weiches Polypropylen oder EPDM. Eine gleichmäßige Verbindungsnaht 9 kann man durch eine exakte Formgebung des Werkzeugs erreichen.

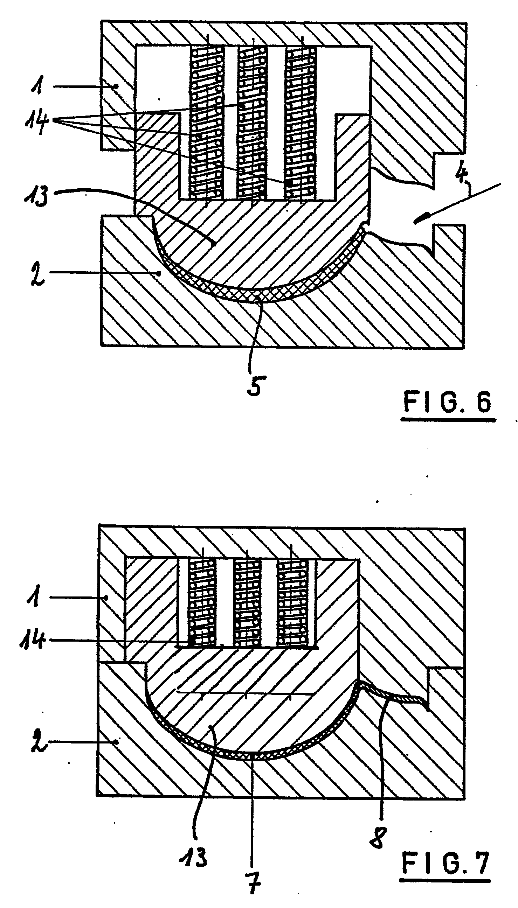

Wenn beispielsweise aus Kostengründen auf die Verwendung eines Extruders verzichtet werden soll, kann die Zuführung des Ausgangsmaterials für den gummielastischen Randstreifen 8 auch mittels eines beheizten Kolbens 11 erfolgen, wie in Fig. 5 angedeutet ist. Die Dosierung des Ausgangsmaterials erfolgt entweder automatisch oder es werden bereits portionierte Stücke des Ausgangsmaterials zugeführt. In einer Kolbenkammer 12 wird das Ausgangsmaterial in einer oder mehreren Stufen auf die Verarbeitungstemperatur von etwa 180°C erwärmt. Kurz bevor sich das Formpreßwerkzeug schließt, werden mittels des Kolbens 11 oder eines beheizten Zylinders eine oder mehrere Portionen in die Form eingeführt, die sich dann schnell schließt. Vorher wurde auf der anderen Seite des Formpreßwerkzeugs das Ausgangsmaterial für das starre Formpreßteil 7 eingelegt, beispielsweise ein Glasmattenthermoplast.

Es ist auch möglich, ein sogenanntes Tandemwerkzeug zu verwenden, wie es in den Fig. 6 und 7 gezeigt ist. Während das Werkzeugunterteil 2 einstückig ausgeführt ist, weist das Werkzeugoberteil 1 ein bewegliches Formwerkzeugteil 13 auf, das sich über Federn 14 am Werkzeugoberteil 1 abstützt.

Wenn die beiden Werkzeughälften 1, 2 gegeneinander bewegt werden, schließt sich zunächst der das Ausgangsmaterial 5 aufnehmende Formraum und das Formpreßteil 7 wird bereits zwischen dem Werkzeugunterteil 2 und dem beweglichen Formwerkzeugteil 13 geformt, bevor das Ausgangsmaterial 6 für den gummielastischen Randstreifen 8 eingebracht wird. Erst wenn sich das Formwerkzeug vollständig schließt (Fig. 7), wird der gummielastischen Randstreifen 8 mit dem Formpreßteil 7 in der schon beschriebenen Weise verschweißt und verbunden. Auf diese Weise läßt sich leicht auch ein schmales Band des Ausgangsmaterials 6 für beispielsweise eine Dichtlippe genau einbringen und fixieren.

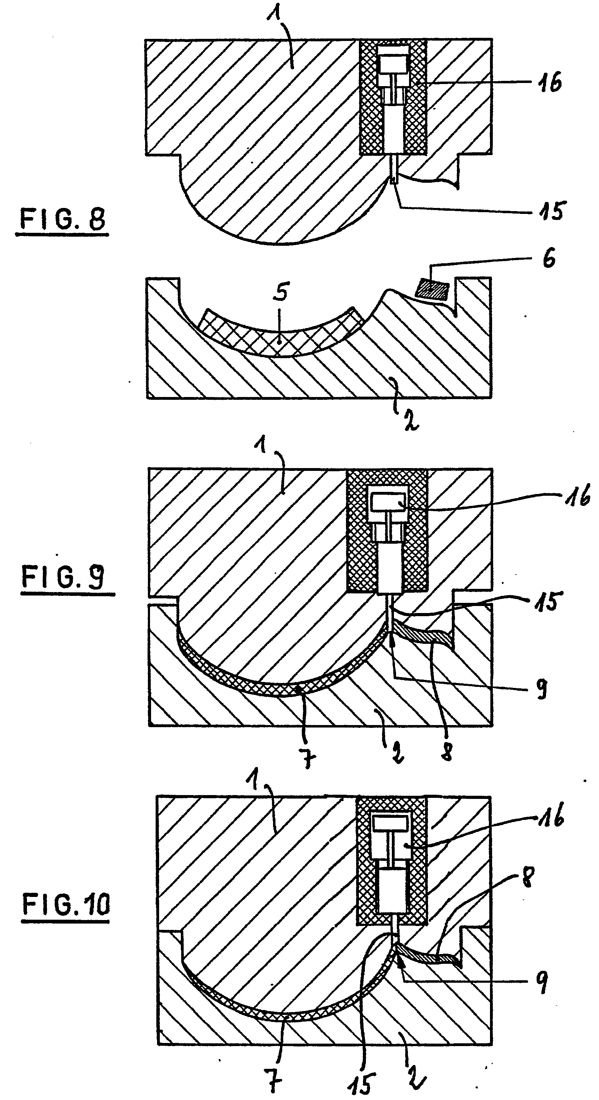

Das in den Fig. 8 bis 11 gezeigte Formwerkzeug ähnelt weitgehend dem Formwerkzeug nach den Fig. 1 bis 3, jedoch ist im Bereich der Verbindungsnaht 9 eine bewegliche Sperrleiste 15 im Werkzeugoberteil 1 angeordnet. Die Sperrleiste 15 ist mit einem in der Zeichnung nur schematisch angedeuteten, im Werkzeugoberteil 1 angeordneten, druckmittelbetätigten Zylinder 16 verbunden.

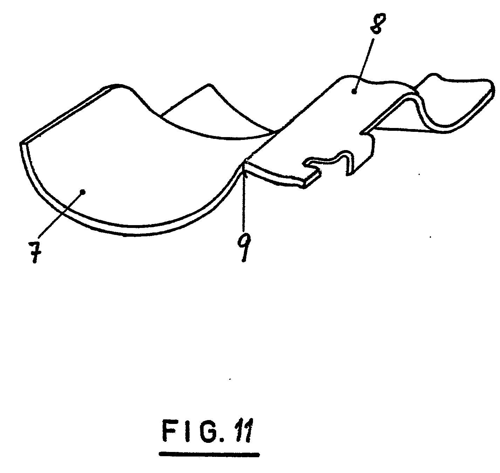

Nachdem die Ausgangsmaterialien 5 und 6 in das Formwerkzeug eingelegt wurden (Fig. 8), schließt sich das Formwerkzeug (Fig. 9), wobei die Sperrleiste 15 die gegenüberliegende Formwand berührt und dadurch zunächst eine Sperre im Bereich der herzustellenden Verbindungsnaht 9 darstellt. Erst wenn das Formwerkzeug vollständig geschlossen ist (Fig. 10) wird die Sperrleiste 15 aus dem Formhohlraum durch den Zylinder 16 zurückgezogen. Die unter Druck- und Wärmeeinwirkung stehenden Materialien verbinden sich dabei exakt an der für die Verbindungsnaht 9 vorgesehenen Stelle.

Alle dargestellten Formwerkzeug sind Tauchkantenwerkzeuge. Wie am Beispiel des Formwerkzeugs nach den Fig. 1 bis 3 deutlich wird, schließen die zuerst miteinander in Eingriff tretenden Tauchkanten 1a und 2a an den Werkzeughälften 1 und 2 das Formwerkzeug bereits in dem in Fig. 2 gezeigten Zustand vor Beendigung des Preßhubs. Dadurch wird ein Ausweichen des Ausgangsmaterials 6 verhindert, so daß eine vollständige Verschweißung im Bereich der Verbindungsnaht 9 sichergestellt ist.

Fig. 11 zeigt ein aus einem starren Formpreßteil 7 und einem elastischen Randstreifen 8 bestehendes Formteil, das auf einem der in den Fig. 1 bis 10 gezeigten Werkzeuge hergestellt wurde. An der Verbindungsnaht 9 sind die beiden Materialien miteinander verschweißt.

**Patentansprüche**

1. Verfahren zur Herstellung von im wesentlichen starren, dünnwandigen Formpreßteilen (7), die an mindestens einem Rand mit einem gummielastischen Randstreifen (8), insbesondere einer Dichtlippe (8) o.dgl. verbunden sind, dadurch gekennzeichnet, daß für das Formpreßteil (7) ein thermoplastisches, Fasern enthaltendes Ausgangsmaterial und für den gummielastischen Randstreifen ein thermoplastisches Ausgangsmaterial verwendet werden, und daß durch Wärmeeinwirkung die beiden thermoplastischen Ausgangsmaterialien plastifiziert und in einem Formwerkzeug unter Druck an ihren Berührungskanten miteinander verschweißt werden.

2. Verfahren nach Anspruch 1, dadurch gekennzeichnet, daß das Ausgangsmaterial für den gummielastischen Randstreifen (8) als Zuschnitt, Granulat oder in extrusionsfähigem Zustand eingebracht wird.

3. Verfahren nach Anspruch 1 oder 2, dadurch gekennzeichnet, daß die Ausgangsmaterialien vor dem Formvorgang erwärmt werden.

4. Verfahren nach Anspruch 1–3, dadurch gekennzeichnet, daß als Ausgangsmaterial für das Formpreßteil Polypropylen verwendet wird.

5. Verfahren nach Anspruch 1–4, dadurch gekennzeichnet daß als Ausgangsmaterial für den gummielastischen Randstreifen Polypropylen und/oder Ethylen-Propylen-Terpolymer verwendet wird/werden.

6. Verfahren nach Anspruch 1–3, dadurch gekennzeichnet, daß das die Ausgangsmaterialien aufnehmende Formwerkzeug vor Beendigung des Preßhubs geschlossen wird.

7. Verfahren nach Anspruch 6, dadurch gekennzeichnet, daß wenn das Formwerkzeug geschlossen ist eine die beiden Ausgangsmaterialien für das Formpreßteil (7) bzw. für den Randstreifen (8) von einander schneidende Sperrleiste (15) aus dem Formhohlraum entfernt wird.

8. Vorrichtung zur Durchführung des Verfahrens nach einem der Ansprüche 1 bis 7, mit einem zwei gegeneinander bewegbaren Werkzeughälften (1, 2) aufweisenden Formwerkzeug, dadurch gekennzeichnet, daß das Formwerkzeug ein Tauchkanten-Formwerkzeug ist.

9. Vorrichtung zur Durchführung des Verfahrens nach einem der Ansprüche 1 bis 7, mit einem zwei gegeneinander bewegbaren Werkzeughälften (1, 2) aufweisenden Formwerkzeug, dadurch gekennzeichnet, daß eine der beiden Werkzeughälften (1) ein federnd abgestütztes Formwerkzeugteil (13) aufweist.

10. Vorrichtung nach Anspruch 8 oder 9, dadurch gekennzeichnet, daß zwischen einem das Ausgangsmaterial (5) für das Formpreßteil (7) aufnehmenden Formraum und einem das Ausgangsmaterial (6) für den gummielastischen Randstreifen (8) aufnehmenden Formraum eine bewegbare Sperrleiste (15) angeordnet ist.

## Claims

1. Method for making essentially rigid, thin-walled compression mouldings (7), which are connected at at least one edge by an elastomeric edge strip (8), in particular a sealing lip (8) or the like, characterized in that a thermoplastic, fibre-containing starting material is used for the compression moulding (7) and a thermoplastic starting material is used for the elastomeric edge strip, and in that the two thermoplastic starting materials are plasticized by exposure to heat and are welded to each other at their contracting edges under pressure in a mould.

2. Method according to Claim 1, characterized in that the starting material for the elastomeric edge strip (8) is introduced as a precut blank, granules or in an extrudable state.

3. Method according to Claim 1 or 2, characterized in that the starting materials are heated before the moulding operation.

4. Method according to Claims 1–3, characterized in that polypropylene is used as starting material for the compression moulding.

5. Method according to Claims 1–4, characterized in that polypropylene and/or ethylene-propylene terpolymer is/are used for the elastomeric edge strip.

6. Method according to Claims 1–3, characterized in that the mould receiving the starting materials is closed before completion of the compression stroke.

7. Method according to Claim 6, characterized in that, when the mould is closed, one of the two starting materials for the compression moulding (7) or for the edge strip (8) is removed from the mould cavity by severing barrier bar (15).

8. Apparatus for carrying out the method according to one of Claims 1 to 7, with a mould having two mould halves (1, 2) which can be moved with respect to each other, characterized in that the mould is a positive mould.

9. Apparatus for carrying out the method according to one of Claims 1 to 7, with a mould having two mould halves (1, 2) which can be moved with respect to each other, characterized in that one of the two mould halves (1) has a resiliently supported mould part (13).

10. Apparatus according to Claim 8 or 9, characterized in that a movable barrier bar (15) is arranged between a mould cavity receiving the starting material (5) for the compression moulding (7) and a mould cavity receiving the starting material (6) for the elastomeric edge strip (8).

## Revendications

1. Procédé pour la fabrication de pièces moulées sous pression (7) sensiblement rigides, à parois minces, lesquelles sont reliées sur au moins un bord à une bande de bordure élastique (8), en particulier à une lèvre d'étanchéité (8) ou un organe analogue, caractérisé par le fait que l'on utilise pour la pièce moulée sous pression (7) une matière constitutive thermoplastique renforcée par des fibres, et pour la bande de bordure élastique une matière constitutive thermoplastique, et par le fait que sous l'effet de la chaleur on plastifie les deux matières constitutives thermoplastiques et on les soude l'une à l'autre sur leurs arêtes de contact, sous pression, à l'intérieur d'un moule.

2. Procédé selon la revendication 1, caractérisé par le fait que la matière constitutive de la bande de bordure élastique (8) est apportée sous la forme d'une découpe additionnelle, d'un granulat ou dans un état apte à l'extrusion.

3. Procédé selon la revendication 1 ou 2, caractérisé par le fait que les matières constitutives subissent un chauffage avant le processus de moulage.

4. Procédé selon les revendications 1 à 3, caractérisé par le fait que pour la pièce moulée sous pression on utilise comme matière constitutive du polypropylène.

5. Procédé selon les revendications 1 à 4, caractérisé par le fait que l'on utilise pour la bande de bordure élastique comme matière de départ du polypropylène et/ou de l'éthylène-propylène-terpolymère.

6. Procédé selon les revendications 1 à 3, caractérisé par le fait que l'on ferme le moule recevant les matières constitutives avant la fin de la course de la presse.

7. Procédé selon la revendication 6, caractérisé par le fait que lorsque le moule est fermé on fait sortir de l'intérieur du moule une arête de blocage (15) qui sépare, par découpe, les deux matières constitutives l'une de l'autre, à savoir celle destinée à la pièce moulée sous pression (7) et celle destinée à la bande de bordure (8).

8. Dispositif pour la mise en œuvre du procédé selon l'une des revendications 1 à 7, comportant un moule à deux moitiés (1, 2) mobiles l'une par rapport à l'autre, caractérisé par le fait que ledit moule est un moule à arête de plongée.

9. Dispositif pour la mise en œuvre du procédé selon l'une des revendications 1 à 7, comportant un moule présentant deux moitiés (1, 2) mobiles l'une par rapport à l'autre, caractérisé par le fait que l'une des deux moitiés de moule (1) présente une partie (13) supportée de manière élastique.

10. Dispositif selon la revendication 8 ou 9, caractérisé par le fait qu'entre un espace recevant la matière constitutive (5) destinée à la pièce moulée sous pression (7) et un espace recevant la matière constitutive (6) destinées à la bande élastique (8) est disposée une une arête de blocage (15) mobile.

FIG. 1

FIG. 2

FIG. 3

FIG. 4

FIG. 5

FIG. 6

FIG.7

FIG. 8

FIG. 9

FIG. 10

F I G. 11